# EUROPEAN PATENT SPECIFICATION

(11) **EP 4 246 939 B1**
(45) Date of publication and mention of the grant of the patent: **27.11.2024**
(21) Application number: 22161910.9
(22) Date of filing: 14.03.2022
(51) Int. Cl.: H04L 69/08, H04L 69/18, H04L 69/00, H04L 67/2871, H04L 67/12, H04L 67/565

(54) **SYSTEM AND METHOD FOR MANAGING CLIENT-SERVER COMMUNICATION**
SYSTEM UND VERFAHREN ZUR VERWALTUNG VON CLIENT-SERVER-KOMMUNIKATION
SYSTÈME ET PROCÉDÉ DE GESTION DE COMMUNICATIONS CLIENT-SERVEUR

(43) Date of publication of application: 20.09.2023
(73) Proprietor: Siemens Mobility GmbH, 81739 München (DE)
(72) Inventor: ESTEVES, Maria Tanya, 403602 Fatorda, Goa (IN); MOHAMMED, Javed, 411017 Pune, Maharashtra (IN)
(74) Representative: Isarpatent

(56) References cited:
- EP-A1- 3 171 552
- US-A1- 2007 076 749
- US-A1- 2018 309 831

## Description

The present invention relates to machine-to-machine communication and more particularly relates to a system and method for managing communication between devices operating on diverse communication protocols.

In a real-world scenario, data is generated by a plurality of sources. Non-limiting examples of sources include field devices, computing devices, controllers and diagnostic systems. The data generated by a source is further processed using one or more client applications. For example, the client applications may be associated with data preprocessing, data analytics, data visualization etc. The client applications may be hosted on one or more clients. However, it may so happen that the source and the client may support different interfaces, data formats and/or communication protocols. Often, the data format supported by two devices in communication may be different, even though the communication protocol remains the same. Alternatively, the data format may be same for both the devices, but the communication protocol may differ. In such situations, different hardware or software components may be required to manage communication between the devices. Consequently extensive efforts and resources are required for enabling such communication.

In light of the above, there exists a need for managing communication between devices operating on diverse interfaces, data formats and communication protocols.

US 2018/309831 A1 relates to an alleged advancements in the field of the Internet of Things (IoT) focusing on a publish-subscribe (pub-sub) data model to enhance data exchange among interconnected devices.

US 2007/076749 A1 relates to an integrated message publisher and subscriber system designed for factory or production automation, focusing on facilitating communication across diverse tools and technologies within manufacturing environments.

EP 3 171 552 A1 relates to a method for managing and optimizing energy systems by integrating devices across multiple domains using a specialized system. This system bridges devices of various protocols by employing native and foreign nodes, which represent the devices in their respective protocol languages.

Hereinafter, the term 'server' may refer to any computer program or device that provides data and the term `client refers to any computer program or device that uses the data provided by the server for one or more client applications.

The object of the present invention is achieved by a method for managing communication between at least one server and at least one client. Here, the server is associated with a technical system that generates source data.

The invention is defined by the appended claims.

The method comprises obtaining source data associated with the technical system from at least one first endpoint associated with the server, by a processing unit, wherein the first endpoint publishes the source data in a predefined source format. In an embodiment, the step of obtaining source data associated with the technical system from at least one first endpoint associated with the server further comprises, polling the at least one first endpoint associated with the server to obtain the source data.

The method further comprises converting the source data in the source format to a generic format. In an embodiment, the generic format comprises key-value pairs indicative of the source data. In an embodiment, the step of converting the source data in the source format to the generic format comprises, firstly, identifying the source format associated with the first endpoint. Further, a first data structure associated with the source data is determined based on the identified source format. Based on the determined first data structure, the source data in the source format is converted to the generic format. The method may further comprise storing the source data in the generic format to an intermediary storage location.

Advantageously, the conversion of the source data in source format to the generic format helps in standardizing the source data. Consequently, the standardized source data may be utilized by a plurality of clients operating on diverse protocols.

The method further comprises converting the source data in generic format to a target format based on the configuration setting corresponding to the server. The configuration setting indicates at least one of an association of the server with the client and the target format associated with the client. In a further embodiment, the method may further comprise identifying the configuration setting corresponding to the server from a plurality of configuration settings stored in a database.. In an embodiment, the step of converting the source data in generic format to the target format based on the configuration setting comprises, determining a second data structure associated with the target format of the client. Based on the determined second data structure, the source data in generic format is converted to the target format.

Advantageously, the present invention provides a mechanism for converting generic data to any target format based on the second endpoint. Consequently, the present invention enables scalability to any number of servers and clients operating on diverse protocols.

The method further comprises providing the source data in the target format to the client. In an embodiment, the step of providing the source data in the generic format to the at least one client comprises, publishing the source data in the target format to at least one second endpoint (125) associated with the client. The method may further comprise analyzing the source data in the target format using at least one client application hosted on the client.

Advantageously, the present invention facilitates communication between a client and a server via endpoints that operate on different communication protocols without the need for customized converter units. The present invention is also extensible to accommodate newer communication protocols by adding corresponding configuration settings to the database, without the need for additional hardware resources.

The object of the present invention is also achieved by an apparatus for managing communication between at least one server and at least one client. The apparatus comprises one or more processing units and a memory unit communicatively coupled to the one or more processing units. The memory unit comprises a communication management module stored in the form of machine-readable instructions executable by the one or more processing units, wherein the communication management module is configured to perform method steps described above.

The object of the present invention is also achieved by a system for managing communication between at least one server and at least one client. The system comprises an apparatus as described above, communicatively coupled to the server and the client. The apparatus is configured to manage communication between the server and the client in accordance with any of the method steps described above.

Disclosed herein is also a computer-readable medium, on which program code sections of a computer program are saved, the program code sections being loadable into and/or executable by a processor which performs the method as described above when the program code sections are executed.

The realization of the invention by a computer program product and/or a non-transitory computer-readable storage medium has the advantage that computer systems can be easily adopted by installing computer program in order to work as proposed by the present invention.

The computer program product can be, for example, a computer program or comprise another element apart from the computer program. This other element can be hardware, for example a memory device, on which the computer program is stored, a hardware key for using the computer program and the like, and/or software, for example a documentation or a software key for using the computer program.

The above-mentioned attributes, features, and advantages of the present invention and the manner of achieving them, will become more apparent and understandable (clear) with the following description of embodiments of the invention in conjunction with the corresponding drawings. The illustrated embodiments are intended to illustrate, but not limit the invention.

The present invention is further described hereinafter with reference to illustrated embodiments shown in the accompanying drawings, in which:
- FIG 1A: illustrates a block diagram of a system for managing client-server communication, in accordance with an embodiment of the present invention;
- FIG 1B: illustrates a block diagram of an apparatus for managing client-server communication, in accordance with an embodiment of the present invention;
- FIG 2: shows a flowchart of a method for managing client-server communication, in accordance with an embodiment of the present invention;
- FIG 3: shows a flowchart of an exemplary method for managing communication between a Track Circuit Module and an OPC UA server, in accordance with an embodiment of the present invention; and
- FIG 4: shows a flowchart of an exemplary method for managing communication between one or more frequency module devices and an MQTT endpoint associated with a client, in accordance with an embodiment of the present invention.

Hereinafter, embodiments for carrying out the present invention are described in detail. The various embodiments are described with reference to the drawings, wherein like reference numerals are used to refer to like elements throughout. In the following description, for purpose of explanation, numerous specific details are set forth in order to provide a thorough understanding of one or more embodiments. It may be evident that such embodiments may be practiced without these specific details.

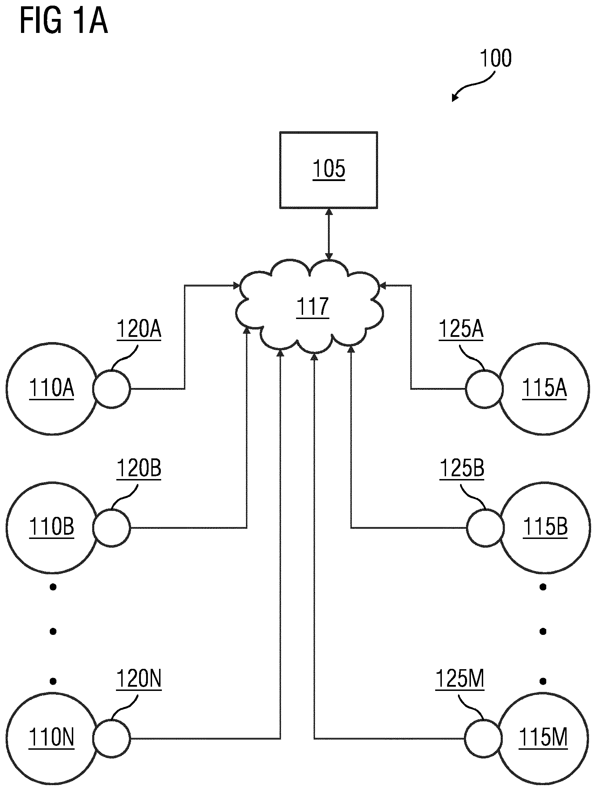

FIG 1A shows a block diagram of a system 100 for managing client-server communication, in accordance with an embodiment of the present invention. The system 100 comprises an apparatus 105 configured to manage communication between a plurality of servers 110A-N (henceforth collectively called server 110) and a plurality of clients 115A-M (henceforth collectively called client 115). The apparatus 105 may be communicatively coupled to the servers 110A-N and the clients 115A-M over a network 117. Each of the clients 115A-M may host a client application that performs operations based on source data received from at least one of the servers 110A-N. More specifically, the client 115 may analyze the source data using the client application.

Each of the servers 110A-N may be associated with a technical system or device in an industrial environment that generates source data. The source data is generated based on one or more operational parameters of the technical system. The term `technical system` as used herein may refer to field devices including, but not limited to, motors, pumps, sensing units, control systems etc. Operational parameters of the technical system may include parameters that indicate at least one of operational status, events, output signals, input signals, failure messages etc.

In the present embodiment, each of the servers 110A-N corresponds to a field device in a railway infrastructure. The field device may be a hardware system that is communicatively coupled to the server 110 for publishing one or more operational parameters via at least one endpoint. The term 'endpoint` as used herein refers to an Input/Output interface exposed by a virtual or physical device on the network 117. The endpoint may be associated with a physical network address that enables the device to send or receive data via the network 117. Each endpoint is associated with a predefined communication protocol.

The term 'first endpoint` as used hereinafter, refers to an endpoint associated with the server 110. Similarly, the term 'second endpoint` as used hereinafter refers to an endpoint associated with the client 115. It must be understood that the server 110 may have multiple first endpoints and each of the first endpoints may be associated with a specific communication protocol. In the present embodiment, the server 110A is associated with at least one first endpoint 120A, the server 110B is associated with at least one first endpoint 120B, the server 110N is associated with the at least one first endpoint 120N and so on. Consequently, each of the first endpoints 120A-N (hereinafter collectively referred to as first endpoint 120) may generate the source data in a unique source format. Each of the clients 115A-M may also have multiple second endpoints 125A-M (hereinafter collectively referred to as second endpoint 125). Each of the second endpoints 125A-M may be associated with a specific communication protocol. Similarly, the client 115A is associated with at least one second endpoint 125A, the client 115B is associated with at least one second endpoint 125B, the client 115N is associated with the at least one second endpoint 125M and so on.

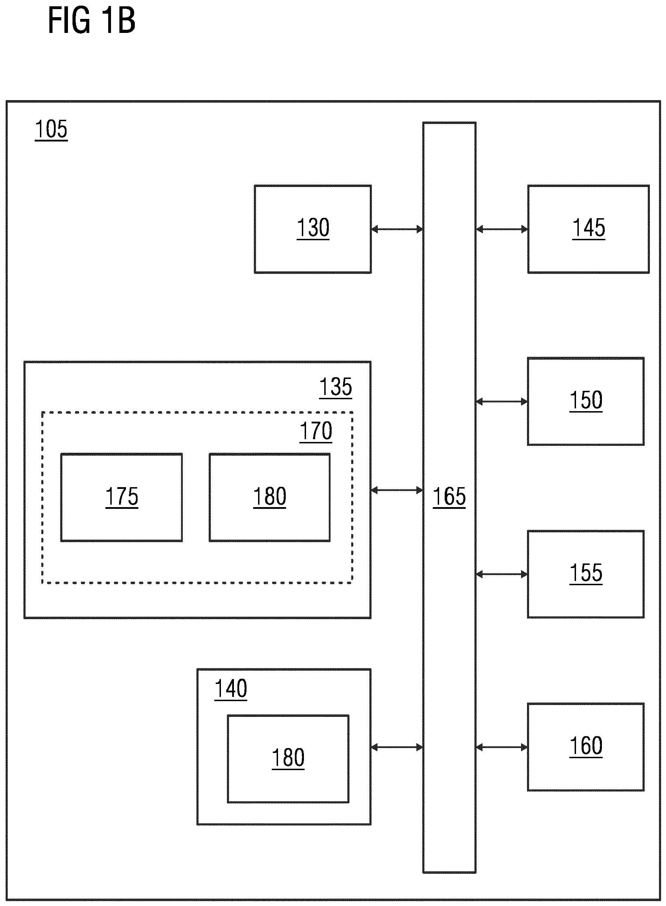

The apparatus 105 comprises a processing unit 130, a memory 135, a storage unit 140, a communication module 145, a network interface 150, an input unit 155, an output unit 160, a standard interface or bus 165 as shown in FIG 1B. The apparatus 105 can be a (personal) computer, a workstation, a virtual machine running on host hardware, a microcontroller, or an integrated circuit. As an alternative, the apparatus 105 can be a real or a virtual group of computers (the technical term for a real group of computers is "cluster", the technical term for a virtual group of computers is "cloud").

The term `processing unit`, as used herein, means any type of computational circuit, such as, but not limited to, a microprocessor, a microcontroller, a complex instruction set computing microprocessor, a reduced instruction set computing microprocessor, a very long instruction word microprocessor, an explicitly parallel instruction computing microprocessor, a graphics processor, a digital signal processor, or any other type of processing circuit. The processing unit 130 may also include embedded controllers, such as generic or programmable logic devices or arrays, application specific integrated circuits, single-chip computers, and the like. In general, the processing unit 130 may comprise hardware elements and software elements. The processing unit 130 can be configured for multithreading, i.e., the processing unit 130 may host different calculation processes at the same time, executing the either in parallel or switching between active and passive calculation processes.

The memory 135 may include one or more of a volatile memory and a non-volatile memory. The memory 135 may be coupled for communication with the processing unit 130. The processing unit 130 may execute instructions and/or code stored in the memory 135. A variety of computer-readable storage media may be stored in and accessed from the memory 135. The memory 135 may include any suitable elements for storing data and machine-readable instructions, such as read only memory, random access memory, erasable programmable read only memory, electrically erasable programmable read only memory, hard drive, removable media drive for handling compact disks, digital video disks, diskettes, magnetic tape cartridges, memory cards, and the like.

The memory 135 comprises a communication management module 170 stored in the memory 135 in the form of machine-readable instructions and executable by the processing unit 130. These machine-readable instructions when executed causes the processing unit 130 to manage communication between the servers 110A-N and the clients 115A-M. The communication management module 170 comprises at least one converter module 175 and at least one publisher module 180. The converter module 175 is configured to obtain source data associated with a technical system from the at least one first endpoint 120 associated with the server 110. The source data is in a predefined source format.

The term 'source format` as used herein, refers to a data format indicative of a communication protocol associated with the first endpoint 120 of the server 110. For example, the first endpoint 120A of the server 110A may publish the source data in accordance with HTTP protocol. More specifically, the first endpoint 120A may generate a binary stream when a change in one or more operational parameters of the corresponding field device occurs. In another example, the first endpoint 120B of the server 110B may publish the source data in accordance with HTTP protocol. More specifically, the first endpoint 120B may generate an XML file when a change in one or more operational parameters of the corresponding field device occurs. In yet another example, the first endpoint 120C of the server 110C publishes the source data in accordance with OPC UA protocol. More specifically, the first endpoint 120C may generate an event when a change in operational parameters of the corresponding field device occurs. The converter module 175 is further configured to convert source data published by the corresponding first endpoint 120 in a predefined source format to a generic format. The generic format may indicate the source format of the source data, keys or variables present in the source data, values corresponding to the keys etc.

The publisher module 180 is configured to convert the source data in generic format to a target format based on a configuration setting associated with the server 110. The configuration setting provides an indication of association between the server 110 and one or more of the clients 115. The term 'association' as used herein refers to a mapping between network addresses of a server and a respective client, wherein the client-server communication takes place. More specifically, the first endpoint of the server is mapped to the second endpoint of the client. The configuration setting also provides an indication of a target format associated with the one or more clients 115 associated with the server 110.. The term 'target format` as used herein, refers to a data format indicative of a communication protocol associated with the second endpoint 125 of the client 115. The publisher module 180 is further configured to provide the source data in the target format to the client 115.

The storage unit 140 comprises a non-volatile memory which stores source data in generic format upon conversion by the converter module 175. The publisher module 180 may fetch the stored source data in generic format, from the storage unit for converting to the target format. The storage unit 140 may further comprise a database 185 of data formats and data structures corresponding to a plurality of predetermined communication protocols. The database also stores a plurality of configuration settings each of which correspond to at least one of the servers 110. The term `data structure` as used herein may refer to data types, keys (variables), values associated with the keys, etc. In addition, the data structure may also indicate the sequence or hierarchy in which the variables are arranged in accordance with the communication protocol.

The input unit 155 may include input means such as keypad, touch-sensitive display, camera, etc. capable of receiving input signal. The output unit 160 may include output means such as displays. The bus 165 acts as interconnect between the processing unit 130, the memory 135, the storage unit 140, and the network interface 150.

The communication module 145 enables the apparatus 105 to communicate with the output device 125. The communication module 145 may support different standard communication protocols such as Transport Control Protocol/Internet Protocol (TCP/IP), Profinet, Profibus, and Internet Protocol Version (Ipv) .

According to an embodiment of the present invention, the apparatus 105 can be an edge computing device. As used herein "edge computing" refers to computing environment that is capable of being performed on an edge device (e.g., connected to technical systems in an industrial setup and one end and to a remote server(s) such as for computing server(s) or cloud computing server(s) on other end), which may be a compact computing device that has a small form factor and resource constraints in terms of computing power. A network of the edge computing devices can also be used to implement the apparatus 105. Such a network of edge computing devices is referred to as a fog network.

In another embodiment, the apparatus 105 is a cloud computing system having a cloud computing based platform configured to provide a cloud service for monitoring faults in an induction motor 105. As used herein, "cloud computing" refers to a processing environment comprising configurable computing physical and logical resources, for example, networks, servers, storage, applications, services, etc., and data distributed over the network 117, for example, the internet. The cloud computing platform may be implemented as a service for monitoring faults in an induction motor 105. In other words, the cloud computing system provides on-demand network access to a shared pool of the configurable computing physical and logical resources. The network 117 is, for example, a wired network, a wireless network, a communication network, or a network formed from any combination of these networks.

The client 115 may further process the source data published to the second endpoint 125, in the target format to perform one or more functions. For example, the source data may be processed to analyze an operational cycle, operational state or failure, remaining useful life etc. associated with the field device.

In an embodiment, the client 115 is a cloud computing platform hosting a cloud-based service that processes time-series data. The time-series data is processed to compute, for example, an operational cycle of the server 110 for a specific interval of time. The operational cycle may be further compared to a standard operating cycle to determine operational stability of the field device. The computed operational cycle along with the standard operating cycle may be further displayed on a graphical user interface associated with the client 115 or a display device communicatively coupled to the client 115. Similarly, the time-series data may be further used to compute remaining useful life of the field device using predetermined mathematical models.

In another embodiment, the client 115 is an OPC UA server comprising a client application that analyses event data published to the second endpoint 125 by the publisher module 180. The event data may correspond to, for example, device failure, system messages, alarms etc. The event data may be processed to identify one or more subsequent actions to be performed at the field device. For example, the one or more subsequent actions may include resetting the field device to a normal state, displaying an indication of the event on a graphical user interface etc.

Those of ordinary skilled in the art will appreciate that the hardware depicted in FIGs 1A and 1B may vary for different implementations. For example, other peripheral devices such as an optical disk drive and the like, Local Area Network (LAN)/ Wide Area Network (WAN)/ Wireless (e.g., Wi-Fi) adapter, graphics adapter, disk controller, input/output (I/O) adapter, network connectivity devices also may be used in addition or in place of the hardware depicted. The depicted example is provided for the purpose of explanation only and is not meant to imply architectural limitations with respect to the present disclosure.

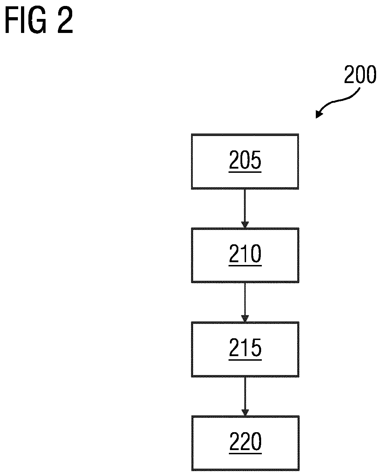

FIG 2 shows a flowchart of a method 200 for managing client-server communication, in accordance with an embodiment of the present invention. The method 200 may be implemented as a machine-executable program on the apparatus 105.

At step 205, source data associated with a technical system from at least one first endpoint, say the first endpoint 110A associated with the server 110A, is obtained in a predefined source format, by the processing unit. In an embodiment, the converter module 175 polls the first endpoint 120A associated with the server 110A to obtain the source data. The term 'polling' as used herein refers to the act of periodically checking the first endpoint 120A for new source data. In an implementation, the apparatus 105 may poll the first endpoint 120A using a polling subscription service. The polling subscription service is an asynchronous process that involves iteratively sending subscribe requests to the server 110A over predefined time intervals. Upon polling, the server 110A provides the latest source data in the source format to the apparatus 105.

At step 210, the source data in the source format, obtained from the first endpoint 120A, is converted to a generic format. In a preferred embodiment, the generic format comprises one or more key-value pairs generated from the source data. The source data is converted to the generic format by firstly, identifying the source format associated with the first endpoint 120A. For example, the source format may be binary streams, OPC UA value change events, XML files, etc. For example, the source format may be identified based on a format in which the server 110A publishes the source data to the first endpoint 120A. In an implementation, a predefined logic based on number of data fields, field delimiters, NULL values, data types etc., present in the data stream corresponding to the source data. Upon identifying the source format, a first data structure associated with the source data is determined. Further, the source data in the source format is converted to the generic format based on the first data structure. More specifically, each source format is associated with a predefined first data structure.

For example, if the source data comprises a binary stream comprising 1s and 0s, the keys may indicate variable fields associated with the field device. The variable fields may indicate a unique identifier and type associated with the field device, origin timestamp of the source data and operational status of sub-components. Each of the keys have a corresponding value. The arrangement of data fields, field sizes etc. in the first data structure are used to identify keys and corresponding values in the source data. Further, the keys and values are ordered as pairs to generate the key-value pairs. The key-value pairs may be further stored in an intermediary storage location within the storage unit.

An example of a key-value pair is shown below:
{"devicename" : "TCM6_WA", "deviceType" : "TCM100", "sourceTimestamp" : "1627457890", "LED1" : "1", "LED2" : "0" ...."TransitFrequency":"12"}

Here, "devicename", "deviceType", "sourceTimestamp" etc. represent keys, while the respective values "TCM6_WA", "TCM100", "1627457890" are paired with the keys to form ordered pairs.

At step 215,
the source data is converted in generic format to a target format based on configuration setting associated with the server 110. In an example, the configuration setting associated with server 110B may indicate an association between the server 110B and the client 110B. In another example, the configuration setting may also indicate association between the server 110B and a plurality of clients, say clients 115B and 115C. The configuration setting also provides an indication of the target format associated with the each of the clients 115 associated with the server 110. In an embodiment, the configuration setting is identified from a plurality of configuration settings stored in the database 185.

In another embodiment, the configuration setting may be dynamically generated based on a request for accessing the source data received from at least one second endpoint, say second endpoint 125D associated with the client 115D. For example, the request may be generated by a polling subscription service running on the client 115B. The request may include one or more data fields indicative of the target format associated with the second endpoint 125B. Further, the configuration setting is dynamically generated based on an identifier corresponding to the second endpoint 125D and the target format associated with the client 115D. For example, the target format may be identified based on the data fields in the request received from the client 115B.

Further, a second data structure is determined based on the target format. The source data is further converted to the target format based on the second data structure. More specifically, the key-value pairs are packaged in accordance with the data fields in the second data structure. Non-limiting examples of the target format may include time-series data, MQTT messages and events.

At step 220, the source data in the target format is provided to the client 115B. The source data is provided to the client 115B, by publishing the source data in target format the second endpoint 125B associated with the client 115B. The client 115B may include one or more second endpoints 125B configured to receive the source data from the publisher unit. For example, the client 115B may be a cloud-based service hosted on a cloud platform, and the second endpoint 125B associated the cloud platform may be configured to receive time-series data. In another example, the second endpoint 125B associated with the client 115B may be configured to receive MQTT messages. In yet another example, the client 115B client may be an OPC UA server, and the second endpoint 125B may be configured to receive source data in the form of an event.

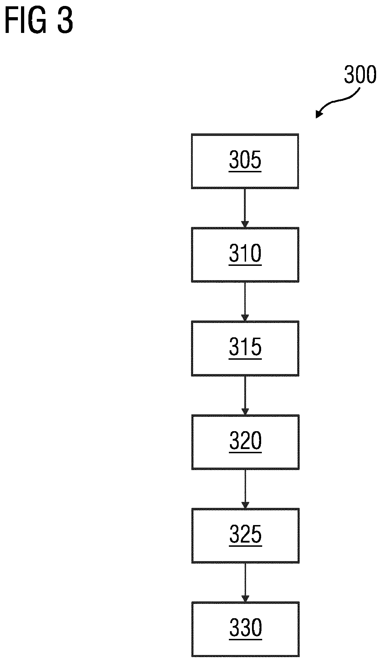

FIG 3 shows a flowchart of an exemplary method 300 for managing communication between a Track Circuit Module (TCM) and an OPC UA server, in accordance with an embodiment of the present invention. The Track Circuit Module is a field device that generates source data corresponding to track circuits.

At step 305, the TCM comprises an internal server (similar to server 110) polls the TCM to obtain source data. At step 310, the source data is published via a HTTP endpoint of the server in the form of a binary stream. At step 315, the HTTP endpoint is polled by an apparatus (similar to apparatus 105). At step 320, the apparatus generates a record comprising key-value pairs corresponding to the binary stream. The record may be further stored in a storage location associated with the apparatus. At step 325, the key-value pairs are fetched from the storage location and converted to OPC UA format based on a configuration setting of the server. In the present example, the configuration setting indicates an association between the TCM and the OPC UA server, and the target format as OPC UA format. At step 330, the apparatus publishes the source data in OPC UA format to a second endpoint associated with the OPC UA server.

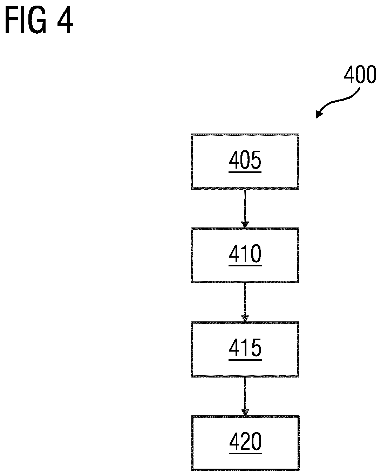

FIG 4 shows a flowchart of an exemplary method 400 for managing communication between one or more frequency module devices and an MQTT endpoint associated with a client (similar to client 115), in accordance with an embodiment of the present invention. Each of the frequency module devices is an OPC UA server that store source data in OPC UA format.

At step 405, the source data in OPC UA format may be obtained from the OPC UA server. In an embodiment, the source data is fetched in OPC UA format using an OPC UA client application subscribed to the OPC UA server. At step 410, an apparatus (similar to 105) converts the source data from OPC UA format to key-value pairs. Further, the key-value pairs may be stored in a storage location. At step 415, the apparatus fetches the key-value pairs and converts them to JSON format based on a configuration setting associated with the OPC UA server. The configuration setting indicates an association between the OPC UA server (or the frequency module device) and the MQTT endpoint. At step 420, the source data in JSON format is published to the MQTT endpoint.

Advantageously, the present invention facilitates multi-protocol communication between devices without the need for customized converter units. Further, the present invention may be extended to managing communication between any number of servers and clients, without the help of additional hardware or software elements.

The present invention is not limited to a particular computer system platform, processing unit, operating system, or network. One or more aspects of the present invention may be distributed among one or more computer systems, for example, servers configured to provide one or more services to one or more client computers, or to perform a complete task in a distributed system. For example, one or more aspects of the present invention may be performed on a client-server system that comprises components distributed among one or more server systems that perform multiple functions according to various embodiments. These components comprise, for example, executable, intermediate, or interpreted code, which communicate over a network using a communication protocol. The present invention is not limited to be executable on any particular system or group of system, and is not limited to any particular distributed architecture, network, or communication protocol.

The invention is defined by the appended claims.

### List of reference numerals

- 100: system for managing client-server communication
- 105: apparatus
- 110: server
- 115: client
- 117: network
- 120: first endpoint
- 125: second endpoint
- 130: processing unit
- 135: memory
- 140: storage unit
- 145: communication module
- 150: network interface
- 155: input unit
- 160: output unit
- 165: standard interface or bus
- 170: communication management module
- 175: converter module
- 180: publisher module
- 185: database

## Claims

1. A computer-implemented method for managing communication between at least one server (110) and at least one client (115), the method comprising:
obtaining (S205) source data associated with a technical system from at least one first endpoint (120) associated with the server (110), by a processing unit, wherein the first endpoint (120) publishes the source data in a predefined source format;
converting (S210) the source data in the source format to a generic format, wherein the generic format comprises key-value pairs indicative of the source data;
converting (S215) the source data in generic format to a target format based on a configuration setting corresponding to the server (110); and
providing the source data in the target format to a client (115).

2. The method according to claim 1, wherein obtaining source data associated with the technical system from the at least one first endpoint (120) associated with the server (110), further comprises:
polling the at least one first endpoint (120) associated with the server (110) to obtain the source data.

3. The method according to claim 1, wherein converting the source data in the source format to the generic format comprises:
identifying the source format associated with the first endpoint (120);
determining a first data structure associated with the source data based on the identified source format; and
converting the source data in the source format to the generic format based on the determined first data structure.

4. The method according to claim 3, further comprising:
storing the source data in the generic format to an intermediary storage location.

5. The method according to claim 1, wherein the configuration setting indicates at least one of an association of the server (110) with the client (115) and the target format associated with the client (115).

6. The method according to claim 1, further comprising:
identifying the configuration setting corresponding to the server (110) from a plurality of configuration settings stored in a database (185).

7. The method according to claim 1 or 6, wherein converting the source data in generic format to the target format based on the configuration setting, comprises:
determining a second data structure associated with the target format of the client (115); and
converting the source data in generic format to the target format based on the determined second data structure.

8. The method according to claim 1, wherein providing the source data in the generic format to the at least one client (115), comprises:
publishing the source data in the target format to at least one second endpoint (125) associated with the client (115) .

9. The method according to any of the claims 1 to 8, further comprising:
analyzing the source data in the target format using at least one client application hosted on the client (115).

10. An apparatus (105) for managing communication between at least one server (110) and at least one client (115), the apparatus (105) comprising:
one or more processing units (130); and
a memory unit (135) communicatively coupled to the one or more processing units (130), wherein the memory unit (135) comprises a communication management module (170) stored in the form of machine-readable instructions executable which, when executed by the one or more processing units (130), cause the one or more processing unit to perform the steps of the method according to any of the claims 1 to 9.

11. A system (100) for managing communication between at least one server (110) and at least one client (115), the system comprising:
an apparatus (105) according to claim 10, communicatively coupled to the server (110) and the client (115), wherein the apparatus (105) is configured to manage communication between the server (110) and the client (115) in accordance with any of the method claims 1 to 9.

12. A computer-program product having machine-readable instructions stored therein, which when executed by one or more processing units (130), cause the processing units (130) to perform a method according to any of the claims 1 to 9.

## Patentansprüche

1. Computerimplementiertes Verfahren zur Verwaltung der Kommunikation zwischen mindestens einem Server (110) und mindestens einem Client (115), wobei das Verfahren Folgendes umfasst:
Erhalten (S205) von Quelldaten, die mit einem technischen System verbunden sind, von mindestens einem ersten Endpunkt (120), der mit dem Server (110) verbunden ist, durch eine Verarbeitungseinheit, wobei der erste Endpunkt (120) die Quelldaten in einem vordefinierten Quellformat veröffentlicht;
Umwandeln (S210) der Quelldaten im Quellformat in ein generisches Format, wobei das generische Format Schlüssel-Wert-Paare umfasst, die Angaben zu den Quelldaten enthalten;
Umwandeln (S215) der Quelldaten im generischen Format in ein Zielformat basierend auf einer dem Server (110) entsprechenden Konfigurationseinstellung; und
Bereitstellen der Quelldaten im Zielformat für einen Client (115) .

2. Verfahren nach Anspruch 1, wobei das Erhalten von Quelldaten, die mit dem technischen System verbunden sind, von dem mindestens einen ersten Endpunkt (120), der mit dem Server (110) verbunden ist, ferner Folgendes umfasst:
Abfragen des mindestens einen ersten, mit dem Server (110) verbundenen Endpunkts (120), um die Quelldaten zu erhalten.

3. Verfahren nach Anspruch 1, wobei das Umwandeln der Quelldaten im Quellformat in das generische Format Folgendes umfasst:
Identifizieren des Quellformats, das mit dem ersten Endpunkt (120) verbunden ist;
Bestimmen einer ersten Datenstruktur, die mit den Quelldaten verbunden ist, basierend auf dem identifizierten Quellformat; und
Umwandeln der Quelldaten im Quellformat in das generische Format auf der Basis der bestimmten ersten Datenstruktur.

4. Verfahren gemäß Anspruch 3, das ferner Folgendes umfasst:
Speichern der Quelldaten im generischen Format an einem Zwischenspeicherort.

5. Verfahren nach Anspruch 1, wobei die Konfigurationseinstellung mindestens eine der folgenden Angaben angibt: eine Verbindung des Servers (110) mit dem Client (115) und das mit dem Client (115) verbundene Zielformat.

6. Verfahren gemäß Anspruch 1, das ferner Folgendes umfasst:
Identifizieren der dem Server (110) entsprechenden Konfigurationseinstellung aus einer Vielzahl von Konfigurationseinstellungen, die in einer Datenbank (185) gespeichert sind.

7. Verfahren nach Anspruch 1 oder 6, wobei das Umwandeln der Quelldaten im generischen Format in das Zielformat auf der Basis der Konfigurationseinstellung Folgendes umfasst:
Bestimmen einer zweiten Datenstruktur, die mit dem Zielformat des Clients (115) verbunden ist; und
Umwandeln der Quelldaten im generischen Format in das Zielformat auf der Basis der bestimmten zweiten Datenstruktur.

8. Verfahren nach Anspruch 1, wobei das Bereitstellen der Quelldaten im generischen Format an den mindestens einen Client (115) Folgendes umfasst:
Veröffentlichen der Quelldaten im Zielformat an mindestens einen zweiten Endpunkt (125), der mit dem Client (115) verbunden ist.

9. Verfahren nach einem der Ansprüche 1 bis 8, das ferner Folgendes umfasst:
Analysieren der Quelldaten im Zielformat unter Verwendung mindestens einer auf dem Client gehosteten Anwendung (115).

10. Vorrichtung (105) zur Verwaltung der Kommunikation zwischen mindestens einem Server (110) und mindestens einem Client (115), wobei die Vorrichtung (105) Folgendes umfasst:
eine oder mehrere Verarbeitungseinheiten (130); und
eine Speichereinheit (135), die kommunikativ mit der einen oder den mehreren Verarbeitungseinheiten (130) gekoppelt ist, wobei die Speichereinheit (135) ein Kommunikationsverwaltungsmodul (170) umfasst, das in Form von maschinenlesbaren, ausführbaren Anweisungen gespeichert ist, die, wenn sie von der einen oder den mehreren Verarbeitungseinheiten (130) ausgeführt werden, die eine oder die mehreren Verarbeitungseinheiten veranlassen, die Schritte des Verfahrens nach einem der Ansprüche 1 bis 9 durchzuführen.

11. System (100) zur Verwaltung der Kommunikation zwischen mindestens einem Server (110) und mindestens einem Client (115), wobei das System Folgendes umfasst:
eine Vorrichtung (105) gemäß Anspruch 10, die kommunikativ mit dem Server (110) und dem Client (115) gekoppelt ist, wobei die Vorrichtung (105) ausgebildet ist, um die Kommunikation zwischen dem Server (110) und dem Client (115) gemäß einem der Verfahren nach Anspruch 1 bis 9 zu verwalten.

12. Computerprogrammprodukt mit darin gespeicherten maschinenlesbaren Anweisungen, die bei Ausführung durch eine oder mehrere Verarbeitungseinheiten (130) die Verarbeitungseinheiten (130) veranlassen, das Verfahren nach einem der Ansprüche 1 bis 9 durchzuführen.

## Revendications

1. Procédé mis en œuvre par ordinateur pour la gestion de communications entre au moins un serveur (110) et au moins un client (115), le procédé comprenant :
l'obtention (S205) de données sources associées à un système technique à partir d'au moins un premier point d'extrémité (120) associé au serveur (110), par une unité de traitement, le premier point d'extrémité (120) publiant les données sources dans un format source prédéfini ;
la conversion (S210) des données sources du format source à un format générique, le format générique comprenant des paires clé-valeur indicatives des données sources ;
la conversion (S215) des données sources du format générique à un format cible sur la base d'un réglage de configuration correspondant au serveur (110) ; et
la fourniture des données sources au format cible à un client (115) .

2. Procédé selon la revendication 1, dans lequel l'obtention des données sources associées au système technique à partir auprès de l'au moins un premier point d'extrémité (120) associé au serveur (110) comprend en outre :
l'interrogation de l'au moins un premier point d'extrémité (120) associé au serveur (110) pour obtenir les données sources.

3. Procédé selon la revendication 1, dans lequel la conversion des données sources du format source au format générique comprend :
l'identification du format source associé au premier point d'extrémité (120) ;
la détermination d'une première structure de données associée aux données sources sur la base du format source identifié ; et
la conversion des données sources du format source au format générique sur la base de la première structure de données déterminée.

4. Procédé selon la revendication 3, comprenant en outre :
le stockage des données sources au format générique à un emplacement de stockage intermédiaire.

5. Procédé selon la revendication 1, dans lequel le réglage de configuration indique au moins l'un d'une association du serveur (110) avec le client (115) et du format cible associé au client (115) .

6. Procédé selon la revendication 1, comprenant en outre :
l'identification du réglage de configuration correspondant au serveur (110) parmi une pluralité de réglages de configuration stockés dans une base de données (185).

7. Procédé selon la revendication 1 ou 6, dans lequel la conversion des données sources du format générique au format cible sur la base du réglage de configuration comprend :
la détermination d'une deuxième structure de données associée au format cible du client (115) ; et
la conversion des données sources du format générique au format source sur la base de la deuxième structure de données déterminée.

8. Procédé selon la revendication 1, dans lequel la fourniture des données sources au format générique à l'au moins un client (115) comprend :
la publication des données sources au formation cible à destination d'au moins un deuxième point d'extrémité (125) associé au client (115).

9. Procédé selon l'une quelconque des revendications 1 à 8, comprenant en outre :
l'analyse des données sources au format cible au moyen d'au moins une application cliente hébergée sur le client (115).

10. Appareil (105) pour la gestion de communications entre au moins un serveur (110) et au moins un client (115), l'appareil (105) comprenant :
une ou plusieurs unités de traitement (130) ; et
une unité de mémoire (135) couplée en communication aux une ou plusieurs unités de traitement (130), l'unité de mémoire (135) comprenant un module de gestion de communication (170) stocké sous la forme d'instructions exécutables, lisibles par machine, qui, lorsqu'elles sont exécutées par les une ou plusieurs unités de traitement (130), amènent les une ou plusieurs unités de traitement à exécuter les étapes du procédé selon l'une quelconque des revendications 1 à 9.

11. Système (100) pour la gestion de communications entre au moins un serveur (110) et au moins un client (115), le système comprenant :
un appareil (105) selon la revendication 10, couplé en communication au serveur (110) et au client (115), l'appareil (105) étant configuré pour gérer des communications entre le serveur (110) et le client (115) selon l'une quelque des revendications de procédé 1 à 9.

12. Produit de programme informatique dans lequel sont stockées des instructions lisibles par machine, qui lorsqu'elles sont exécutées par une ou plusieurs unités de traitement (130), amènent les unités de traitement (130) à réaliser un procédé selon l'une quelconque des revendications 1 à 9.
